(19) **Europäisches Patentamt**

**European Patent Office**

**Office européen des brevets**

(11) **EP 0 690 095 B1**

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(51) Int Cl.$^7$: **C08L 23/04**, C08K 3/04

(21) Anmeldenummer: **95109582.7**

(22) Anmeldetag: **21.06.1995**

(54) **Antistatische Polyethylenformmassen**

Antistatic molding compositions based on polyethylenes

Masses à moules antistatiques basées sur des polyéthylènes

(84) Benannte Vertragsstaaten:
**BE CH DE FR GB IT LI NL**

(30) Priorität: **28.06.1994 DE 4422582**
**15.04.1995 DE 19514262**

(43) Veröffentlichungstag der Anmeldung:
**03.01.1996 Patentblatt 1996/01**

(73) Patentinhaber: **Ticona GmbH**
**65451 Kelsterbach (DE)**

(72) Erfinder:
• **Van Laak, Hermann**
**D-46569 Hünxe (DE)**
• **Ehlers, Jens, Dr.**
**D-46499 Hamminkeln (DE)**
• **Berzen, Josef**
**D-46147 Oberhausen (DE)**
• **Gusik, Meinhard**
**D-46147 Oberhausen (DE)**

(56) Entgegenhaltungen:
EP-A- 0 057 891 EP-A- 0 330 168
DE-A- 1 494 230

• **DATABASE WPI Derwent Publications Ltd.,**
**London, GB; AN 88-095557 & JP-A-63 046 244**
**(MITSUBISHI BELTING) , 27.Februar 1988**

## Beschreibung

Die Erfindung betrifft antistatisch ausgerüstetes Polyethylen (PE), das besonders zur Verarbeitung durch Spritzgießen geeignet ist.

Wegen seiner schlechten elektrischen Leitfähigkeit lädt sich Polyethylen, gleich anderen polymeren Werkstoffen, elektrostatisch auf. Diese Eigenheit steht seiner Verwendung in verschiedenen technischen Bereichen entgegen und hat zur Entwicklung von Materialien geführt, die antistatisch sind, also eine zumindest geringe elektrische Leitfähigkeit besitzen. Als antistatisch stuft man feste Stoffe ein, die einen Oberflächenwiderstand von höchstens $10^9$ $\Omega$ haben.

Zur Verhinderung der elektrostatischen Aufladung von Polyolefinen sind zahlreiche Maßnahmen bekannt. Die Leitfähigkeit kann bereits in der Synthese durch chemisches Modifizieren des Kunststoffes selbst durch Beeinflussung seines molekularen Bauplanes oder nachträglich z.B. durch Oxidation der Oberfläche oder durch Zusatz elektrisch leitfähiger Füllstoffe (Antistatika) erreicht werden. Als Antistatika kommen ionogene organische Verbindungen unterschiedlicher Konstitution mit hohem Siedepunkt in Betracht, die mit dem Polyolefin ausreichend verträglich sind, d.h. nicht zum Ausschwitzen neigen. Zu ihnen gehören Substanzen mit Hydroxyl-, Amino- oder Amidgruppen. Für bestimmte Anwendungsfälle kann man als antistatische Füllstoffe auch Metallfasern, -plättchen oder -pulver einsetzen.

Das klassische Antistatikum ist Ruß, der in den unterschiedlichsten Kunststoffen von einer Mindestkonzentration an, die zwischen 5 und 10 % liegt, elektrische Leitfähigkeit bewirkt. Um Polyethylene mit viskosimetrisch bestimmten, mittleren Molmassen bis etwa 500.000 g/l wirksam antistatisch auszurüsten, ist bei homogener Verteilung ein Rußgehalt von 10 bis 20 Gew.-% erforderlich. Nachteilig ist, daß bei höheren Konzentrationen wertvolle Eigenschaften des Polyethylens, wie seine Zähigkeit, und auch seine Verschleißfestigkeit, negativ beeinflußt werden. Eine Möglichkeit, den damit verbundenen Qualitätsverlust zu vermeiden, besteht darin, den Füllstoff nicht statistisch in dem genannten Polyethylentypen zu verteilen. Man erreicht eine derartige Verteilung durch Verwendung leitfähiger Füllstoffteilchen mit einem wesentlich kleineren Durchmesser als dem Durchmesser der Primärteilchen des Kunststoffs. Mischungen dieser Zusammensetzung werden dann bei nicht zu hohen Temperaturen verpreßt. Ein vollständiges Aufschmelzen des Kunststoffes muß unterbleiben um zu verhindern, daß der elektrisch leitfähige Füllstoff in das Polymerteilchen hineinwandert. Es kommt zur Ausbildung einer sogenannten Kern-Mantel-Struktur, die gegenüber einer homogenen Rußverteilung die gleiche elektrische Leitfähigkeit bei deutlich niedrigerem Rußgehalt ergibt. Um die Kern-Mantel-Struktur zumindest teilweise zu erhalten, dürfen sie nicht vollständig aufgeschmolzen werden und sind aus diesem Grund nur der Verarbeitung durch Pressen zugänglich.

Es bestand daher die Aufgabe, Polyethylenformmassen bereitzustellen, die trotz antistatischer Ausrüstung mit Ruß hohe Zähigkeit und Verschleißfestigkeit besitzen und durch thermischen Verfahren, z.B. durch Pressen, Extrudieren oder Spritzgießen, verarbeitet werden können.

Diese Aufgabe wird gelöst durch Polyethylenformmassen zur Herstellung von Formkörpern mit einem Oberflächenwiderstand von höchstens $10^9$ $\Omega$. Die Formmassen bestehen aus

a) 5 bis 57 Gew.-% eines Polyethylens oder eines Ethylencopolymerisats mit einer Grenzviskositätszahl von 100 bis 700 ml/g,

b) 35 bis 43 Gew.-% eines Polyethylens mit einer Grenzviskositätszahl von mindestens 1600 ml/g, wobei die Summe der Komponenten a und b stets 100 Gew.-% beträgt und die Grenzviskositätszahl des Polymerengemischs aus a und b mindestens 1600 ml/g beträgt,

c) 1,0 bis 10,0 Gew.-% (bezogen auf 100 Gew.-% des Polymerengemischs aus a und b) Ruß sowie

d) 0 bis 5,0 Gew.-% (bezogen auf die Mischung aus c und dem Polymerengemisch aus a und b) üblicher Zusätze,

Die polymeren Mischungsbestandteile der neuen Polyethylenformmassen werden durch ihre jeweilige Grenzviskositätszahl [η] (auch als Staudinger-Index oder Intrinsic Viscosity bezeichnet) charakterisiert. Diese Größe wird aus der Viskositätszahl η (experimentell bestimmt in Dekalin als Lösungsmittel bei 135°C; vgl. hierzu DIN 53 728 Blatt4) nach der Martin-Gleichung

$$log\eta = log\,[\eta] + K \cdot [\eta] \cdot c$$

ermittelt. K ist eine dimensionslose Zahl und hat den Wert 0,139. c ist abhängig von der Grenzviskositätszahl und beträgt 0,03 g/dl für PE-Typen mit einer Grenzviskositätszahl von 1600 bis 5000 ml/g und 0,1 g/dl für Polyethylen-Typen mit einer Grenzviskositätszahl von 100 bis 700 ml/g.

Die Grenzviskositätszahlen als Kennzeichen der Schmelzviskosität sind ein Maß für die mittleren Molmassen der Polymerisate. Der Grenzviskositätsbereich von 100 bis 700 ml/g ist nach L.H. Henry, J. Polymer Sci., 36, 3 (1959) charakteristisch für Polyethylene mit einer Molmasse von etwa 50.000 bis etwa 500.000 g/mol. Derartige Polyethylene werden im folgenden auch als PE-NMW bezeichnet. PE-NMW, das den genannten Forderungen entspricht, erhält man z.B. nach einer Arbeitsweise, die in der DE-C-2 837 481 beschrieben ist. Hierbei verwendet man gesondert hergestellte Ti(III)-halogenide und organische Aluminiumverbindungen als Katalysatoren und regelt die Molmasse des Polymerisats mit Sauerstoff und gegebenenfalls Wasserstoff. Die Umsetzung verläuft bei 20 bis 250°C und 0,1 bis 10 MPa.

Grenzviskositätszahlen von 1600 ml/g und mehr beschreiben nach Margolies (CZ-Chemie-Technik 1974, S. 129 ff) Polyethylene mit mittleren Molmassen (Gewichtsmittel) von etwa $3,3 \times 10^6$ g/mol und höher (ultrahochmolekulares Polyethylen oder PE-UHMW).

Die PE-NMW-Komponente a wird mit 5 bis 57 Gew.-% in der Polyethylenformmasse eingesetzt, die PE-UHMW-Komponente b mit 95 bis 43 Gew.-%. Die Summe der PE-NMW-Komponente a und der PE-UHMW-Komponente b beträgt dabei stets 100 Gew.-%. Die Grenzviskositätszahl des PE-NMW beträgt 100 - 700 ml/g, bevorzugt 120 - 500 ml/g, die Grenzviskositätszahl des PE-UHMW mindestens 1600 ml/g und bevorzugt 1900 - 6000 ml/g und die Grenzviskositätszahl der Polymerenmischung aus der PE-NMW-Komponente a und der PE-UHMW-Komponente b mindestens 1600 ml/g und bevorzugt mindestens 1900 ml/g.

Ein bewährter Prozess, der zu Polyethylenen des PE-UHMW-Typs führt, ist Gegenstand der DE-C-2 361 508. Er arbeitet bei Drücken von 0,1 bis 10 MPa und Temperaturen von 30 bis 130°C unter Verwendung von Katalysatoren aus Titan(III)-halogeniden und organischen Aluminiumverbindungen. Auch andere Verfahren sind geeignet, z.B. die ebenfalls unter niedrigen Drücken ablaufende Ethylenpolymerisation in Gegenwart von Chromoxid-Katalysatoren.

PE-UHMW zeichnet sich durch eine Reihe physikalischer Kenndaten aus, die ihm vielfältige Einsatzmöglichkeiten eröffnen. Hervorzuheben sind sein hoher Verschleißwiderstand, sein niedriger Reibungskoeffizient gegenüber anderen Werkstoffen und sein ausgezeichnetes Zähigkeitsverhalten. Überdies ist es bemerkenswert beständig gegenüber zahlreichen Chemikalien.

Aufgrund dieses günstigen tribologischen und chemischen Verhaltens findet PE-UHMW in den verschiedensten technischen Gebieten als vielseitiger Werkstoff Anwendung. Beispiele sind die Textilindustrie, der Maschinenbau und die chemische Industrie. Als Nachteil erweist sich jedoch, daß PE-UHMW wegen seiner auch oberhalb des Kristallitschmelzpunktes extrem niedrigen Fließfähigkeit nach den für Thermoplasten gängigen Methoden nur schwierig zu Formkörpern zu verarbeiten ist. So lassen sich z.B. aus PE-UHMW auf den für PE-NMW geeigneten kunststoffverarbeitenden Maschinen keine Formkörper herstellen, in denen sich die hervorragenden mechanischen Eigenschaften des Ausgangswerkstoffs unverändert wiederfinden:

Überraschenderweise hat sich gezeigt, daß Formkörper, die aus PE-NMW/PE-UHMW-Mischungen hergestellt wurden, zur Erzielung desselben Oberflächenwiderstands eine deutlich geringere Rußmenge benötigen, als es der Summe der Rußanteile entspricht, die jede der Mischungskomponenten allein erfordert, um den gewünschten Oberflächenwiderstand einzustellen. So wird z.B. durch Zusatz von 20 Gew.-% PE-UHMW zu PE-NMW die zur Erzielung eines Oberflächenwiderstands von $10^9$ $\Omega$ erforderliche Rußmenge, bezogen auf PE-NMW, auf etwa ein Drittel, bezogen auf die Mischung, auf etwa die Hälfte gesenkt.

Der geringe Rußbedarf zur Erzielung einer bestimmten Leitfähigkeit bei den erfindungsgemäßen Polyethylenformmassen, kann durch Ausbildung einer Kern-Mantel-Struktur gedeutet werden, die im Gegensatz zu den bekannten Kern-Mantel-Strukturen (vgl. z.B. K.-H. Möbius, Kunststoffe 78 (1988), Seiten 53, 55) nicht durch eine besondere thermische Behandlung der Mischung aus Primärteilen des Kunststoffs und Füllstoffteilchen erzielt wird, sondern durch Mischung von Komponenten, die sich beim Erhitzen unterschiedlich verhalten. In diesem Zusammenhang ist das thermische Verhalten von PE-NMW und PE-UHMW bedeutsam. Bei Erhitzen geht PE-NMW oberhalb des Kristallitschmelzpunktes in eine Schmelze über, in der sich Additive lösen oder unlösliche Füllstoffe wie Ruß homogen verteilen lassen. PE-UHMW ist dagegen auf Grund seines viskoelastischen Verhaltens selbst bei hohen Temperaturen formstabil. Auch oberhalb des Kristallitschmelzpunktes (und unterhalb der Zersetzungstemperatur) bleiben die Polyethylenteilchen erhalten. Füllstoffe werden daher lediglich zwischen den PE-UHMW-Partikeln, d.h. an den Korngrenzen, nicht aber im Korn selbst gelagert. Es ist anzunehmen, daß sich beim Erhitzen rußhaltiger Mischung von PE-NMW und PE-UHMW die Rußpartikel in der Schmelze des niedermolekularen Polyethylens homogen verteilen, die nichtschmelzenden, in einen viskoelastischen Zustand übergehenden Teilchen des ultrahochmolekularen Polyethylens hingegen nur von einer Schicht aus leitfähigem Ruß umgeben werden, so daß eine Kern-Mantel-Struktur entsteht, in der die Kerne von den PE-UHMW-Partikeln gebildet werden, die in der PE-NMW-Schmelze verteilt sind. Es ist hervorzuheben, daß die Kern-Mantel-Struktur von PE-NMW/PE-UHMW-Mischungen im gesamten für Polyethylene gebräuchlichen thermischen und mechanischen Verarbeitungsbereich erhalten bleibt, also z.B. auch bei hohen Temperaturen (etwa 300°C) und/oder hoher Scherung, wie sie beim Spritzgießen auftritt.

Besonders bemerkenswert ist, daß die mechanischen Eigenschaften von Formmassen, die einen gewissen Anteil PE-NMW enthalten, trotz des Rußzusatzes ausgezeichnet sind. Insbesondere Zähigkeit und Verschleiß werden durch die PE-UHMW-Beimischung gegenüber Formmassen aus PE-NMW allein verbessert. Dagegen leidet die Verarbeitbarkeit durch thermische Verfahren, z.B. durch Spritzguß, aufgrund des PE-UHMW-Gehaltes nicht.

Formmassen, die überwiegend PE-UHMW (bezogen auf das Polymerengemisch aus den Komponenten a und b) enthalten, zeichnen sich durch ein besonders hohes Niveau an Zähigkeit und Verschleißfestigkeit aus. Die Zumischung von PE-NMW erhöht die Fließfähigkeit und erleichtert die Plastifizierung der Formmassen im Vergleich zu ungemischtem PE-UHMW mit dem Ergebnis, daß die Verarbeitbarkeit z.B. durch Spritzgießen oder Extrusion verbessert wird.

Mischungen aus 5 bis 40 Gew.-% PE-NMW und 95 bis 60 Gew.-% PE-UHMW können durch Pressen, Spritzguß oder Schneckenextrusion zu Formkörpern verarbeitet werden, die eine hohe Beständigkeit gegenüber hydroabrasivem Verschleiß und Gleitverschleiß besitzen. Mischungen mit einem hohen PE-UHMW-Anteil werden bevorzugt der Preßverarbeitung zugeführt.

Formmassen mit mehr als 40 und maximal 57 Gew.-% PE-NMW sowie weniger als 60 und minimal 43 Gew.-% PE-UHMW eignen sich insbesondere zur Herstellung von Spritzgußteilen, die Gleitverschleiß gegenüber Gleitpartnern mit polierter oder rauher Oberfläche unterworfen sind.

Anstelle von PE-NMW können in allen Mischungen auch Copolymerisate mit Grenzviskositätszahlen von 100 bis 700 ml/g aus Ethylen als Hauptkomponente und geradkettigen oder verzweigten $\alpha$-Olefinen, wie Propylen, 1-Buten-1-Penten, 1-Hexen und 4-Methylpenten verwendet werden. Der Comonomerenanteil in diesen Polymerisaten beträgt bis zu 10 Gew.-%, insbesondere von 0,5 bis 5 Gew.-%. Dementsprechend umfaßt die Kurzbezeichnung PE-NMW auch solche Copolymerisate.

Zur Herabsetzung des Oberflächenwiderstandes auf Werte von höchstens $10^9 \, \Omega$ setzt man dem Polymerengemisch aus den Komponenten a und b Ruß (Komponente c) in Mengen von 1,0 bis 10 Gew.-%, bevorzugt 1,0 - 8,0 Gew.-% (bezogen auf 100 Gew.-% des Polymerengemischs aus a und b) zu. Die im Einzelfall anzuwendende Rußmenge richtet sich nach dem Rußtyp und nach dem Anteil des Polyethylens bzw. des Ethylencopolymerisats mit einer Grenzviskositätszahl im Bereich von 100 bis 700 ml/g in der Formmasse.

Geeignet für die erfindungsgemäßen Massen sind die verschiedensten Rußarten, unabhängig davon, ob sie durch unvollständige Verbrennung von Erdgas, Erdöl oder Steinkohlenteeröl-Produkten oder durch thermische Spaltung von Erdgas oder niederen Kohlenwasserstoffen erhalten wurden.

Die elektrische Leitfähigkeit von Ruß wird durch eine Anzahl Parameter charakterisiert, von denen die Teilchengröße, die äußere und innere Oberfläche (Porosität), die Struktur und die Oberflächenchemie besondere Bedeutung haben. Zwischen Teilchengröße, Oberfläche und Struktur eines Russes besteht ein funktioneller Zusammenhang, der durch den sogenannten Ölbedarf (gemessen nach DIN ISO 787/5, angegeben in g Öl/100 g Ruß) erfaßt wird. Mit abnehmender Teilchengröße, steigender Oberfläche und Struktur des Russes nehmen der Ölbedarf und die erzielbare elektrische Leitfähigkeit zu. Bewährt haben sich Russe mit einem Ölbedarf im Bereich von 600 bis 2000 g/100 g. Die Struktur von Russen wird nach DIN 53601 oder ASTMD 2414 durch die Aufnahme von Dibutylphthalat (DBP) gemessen (Angabe in ml DBP/100 g Ruß). Ruß mit hoher Struktur, d.h. mit DBP-Werten >115 ml/100 g bezeichnet man als Leitfähigkeits- bzw. Hochleitfähigkeitsrusse; sie werden als Bestandteil der erfindungsgemäßen Formmassen bevorzugt. Besonders geeignet sind Russe mit DBP-Werten zwischen 120 und 500 ml/100 g.

Die Messung des Oberflächenwiderstands von Formkörpern, die aus den erfindungsgemäßen Formmassen hergestellt wurden, erfolgt nach DIN VDE 0303, Teil 30. Bei Oberflächenwiderständen, die $\leq 10^9 \, \Omega$ sind, treten elektrostatische Aufladungsvorgänge nicht mehr auf.

Zur Herstellung der erfindungsgemäßen Polyethylenmassen mischt man die pulverförmigen Ausgangsmaterialien homogen in einem geeigneten Mischer. Anschließend kann die homogene Mischung unter Aufschmelzen der PE-NMW-Komponente in einem Extruder verdichtet werden. Nach einem anderen Verfahren mischt und homogenisiert man PE-NMW und PE-UHMW in einem Zweischneckenextruder. Diese Arbeitsweise erlaubt es, die Masse in Granulatform zu überführen.

Dem Polymerisatgemisch können gegebenenfalls 0,05 bis 5 Gew.-%, bevorzugt 0,1 bis 2,5 Gew.-% (bezogen auf die Mischung aus Polyethylenen (Komponenten a und b) und Ruß (Komponente c)) an üblichen Zusätzen hinzugefügt werden. Zu ihnen zählen Verarbeitungshilfsmittel und Stabilisatoren, wie Korrosionsschutzmittel, Licht- und Wärmestabilisatoren. Weiterhin können Pigmente und/oder Füllstoffe Bestandteile der Polyethylenformmassen sein. Als Füllstoffe kommen z.B. anorganische Materialien, wie Kieselsäure in ihren verschiedenen natürlichen oder industriell erzeugten Erscheinungsformen, natürliche oder künstliche Aluminium- oder Magnesiumsilikate, ferner Zeolithe, Calciumcarbonat und Bariumsulfat in Betracht. Füllstoffe können auch Kugeln, z.B. aus Glas und Fasern, z.B. aus Glas, Kohlenstoff, Bor, Polyester oder Polyamiden sein. Schließlich können den Formmassen auch Schmier- und Gleitmittel, wie Zinkstearat, zugesetzt werden.

Die neuen Formmassen können auf herkömmlichen Spritzgießmaschinen ein- oder mehrstufig verarbeitet werden. Besondere Bedingungen sind dabei nicht einzuhalten. Es hat sich jedoch für den konventionellen Spritzguß von Formmassen, die überwiegend PE-UHMW enthalten, bewährt, bei Massetemperaturen von 240 bis 310°C und Spritzdrücken von 100 bis 400 MPa zu arbeiten.

Die erfindungsgemäßen Formmassen eignen sich ausgezeichnet zur Herstellung beliebig gestalteter Formkörper, z.B. antistatischer Gleitelemente.

In den nachfolgenden Beispielen werden die neuen Polyethylenformmassen näher beschrieben. Selbstverständlich ist die Erfindung aber nicht auf die dargestellten Ausführungsformen beschränkt.

1. Charakteristik der Bestandteile der Formmassen

| A. PE-NMW | |
|---|---|
| Grenzviskositätszahl | 206 [ml/g] |
| Kerbschlagzähigkeit | |
| U-Kerbe | 4 [mJ/mm$^2$] |
| 15° Doppelspitzkerbe | etwa 10 [mJ/mm$^2$] |
| relativer hydroabrasiver Verschleiß | 594 |
| B. PE-UHMW | |
| Grenzviskositätszahl | 2.880 [ml/g] |
| Kerbschlagzähigkeit | |
| U-Kerbe | kein Bruch |
| 15° Doppelspitzkerbe | etwa 130 bis 150 |
| relativer hydroabrasiver Verschleiß | 70 |

Die Kerbschlagzähigkeit wird in Anlehnung an ISO 179 (1993) gemessen, die Bestimmung des hydroabrasiven Verschleißes (Sand-Slurry-Test) ist in CZ-Chemie Technik 3, 129, 130 (1974) beschrieben und wird hier mit einem PE-UHMW-Typ verglichen, dessen Grenzviskositätszahl 1900 ml/g beträgt.

| C. Ruß | |
|---|---|
| DBP-Absorption | 120 ml/100 g |
| Ölbedarf | 650 g/100 g |

2. Eigenschaften der Formmassen

Zur Herstellung der Formmassen werden PE-NMW, PE-UHMW und Ruß in den angegebenen Mengen in einem Mischer homogen gemischt und anschließend auf einer Spritzgießmaschine (DEMAG D 175) bei 260°C Massetemperatur, 60°C Werkzeugtemperatur und einer Einspritzzeit von 1,8 sec zu Formteilen mit einem Gewicht von 180 g und einer Wanddicke von etwa 10 mm verarbeitet.

A. Leitfähigkeitsverhalten

Aus den unter 1. beschriebenen Komponenten werden Formmassen unterschiedlicher Zusammensetzung hergestellt und durch Spritzgießen zu Formkörpern verarbeitet. Durch Messung des Oberflächenwiderstandes wird der zur Erzielung eines Oberflächenwiderstandes $\leq 10^9$ $\Omega$ erforderliche Rußanteil in den Formmassen ermittelt.

Tabelle 1

| PE-NMW Komponente a (Gew.-%) | PE-UHMW Komponente b (Gew.-%) | erforderlicher Rußgehalt (Gew.-%, bezogen auf 100 Gew.-% des Polymerengemischs aus a und b) |
|---|---|---|
| (Summe aus Komponente a und b = 100 Gew.-%) | | |
| > 50 | < 50 | etwa 7,5 |
| 50 bis 20 | 50 bis 80 | etwa 2,5 |
| < 20 | > 80 | etwa 1,0 |

Bei gleicher stofflicher Zusammensetzung ist die Leitfähigkeit von Formkörpern abhängig von dem für die Verarbeitung der Formmassen gewählten Verfahren.

B. Mechanische Eigenschaften

Aus den unter 1. beschriebenen Komponenten werden Formmassen unterschiedlicher Zusammensetzung hergestellt und durch Spritzgießen oder Pressen zu Formkörpern verarbeitet.

Tabelle 2

| Bestandteile der Formmasse | Zusammensetzung der Formmasse | | | |
|---|---|---|---|---|
| PE-NMW | 80 | 50 | 20 | [Gew.-% bez. auf Polymerengemisch] |
| PE-UHMW | 20 | 50 | 80 | [Gew.-% bez. auf Polymerengemisch] |
| Ruß | 7,5 | 2,5 | 1,0 | [Gew.-% bez. auf 100 Gew.-% des Polymerengemisches aus a) und b)] |
| Verarbeitung durch | | | | |
| Spritzguß | | | | |
| Oberflächenwiderstand | 6 | 5 | 12 | [$10^6$ ] |
| Pressen | | | | |
| Oberflächenwiderstand | 17 | 100 | ~300 | [$10^6$ ] |
| Kerbschlagzähigkeit (15° Doppelspitzkerbe | 11 | 21 | 138 | [mJ/mm$^2$] |
| relativer hydroabrasiver Verschleiß | 471 | 417 | 112 | |

**Patentansprüche**

1. Polyethylenformmassen zur Herstellung von Formkörpern mit einem Oberflächenwiderstand von höchstens $10^9$ Ω bestehend aus

   a) 5 bis 57 Gew. % eines Polyethylens oder eines Ethylencopolymerisats mit einer Grenzviskositätszahl von 100 bis 700 ml/g,
   b) 95 bis 43 Gew. % eines Polyethylens mit einer Grenzviskositätszahl von mindestens 1600 ml/g, wobei die Summe der Komponenten a und b stets 100 Gew. % beträgt und die Grenzviskositätszahl des Polymerengemischs aus a und b mindestens 1600 ml/g beträgt,
   c) 1,0 bis 10,0 Gew. % (bezogen auf 100 Gew. % des Polymerengemischs aus a und b) Ruß, sowie
   d) 0 bis 5,0 Gew. % (bezogen auf die Mischung aus c und dem Polymerengemisch aus a und b) üblicher Zusätze.

2. Polyethylenformmassen nach Anspruch 1, **dadurch gekennzeichnet**, daß die Komponente d mit 0,05 bis 5,0 Gew. % (bezogen auf die Mischung aus c und dem Polymerengemisch aus a und b) eingesetzt wird.

3. Polyethylenformmassen nach einem oder mehreren der Ansprüche 1-2, **dadurch gekennzeichnet**, daß die Ethylencopolymerisate mit einer Grenzviskositätszahl von 100 bis 700 ml/g einen Comonomerenanteil enthalten, der bis zu 10 Gew. % beträgt.

4. Polyethylenformmassen nach einem oder mehreren der Ansprüche 1-2, **dadurch gekennzeichnet**, daß die Ethylencopolymerisate mit einer Grenzviskositätszahl von 100 bis 700 ml/g einen Comonomerenanteil enthalten, der 0,5 bis 5 Gew. % beträgt.

5. Polyethylenformmassen nach einem oder mehreren der Ansprüche 1 bis 4 mit einem Anteil von bis zu 50 Gew. % (bezogen auf das Polymerengemisch aus a und b) eines Polyethylens oder eines Ethylencopolymerisats mit einer Grenzviskositätszahl von 100 bis 700 ml/g, **dadurch gekennzeichnet**, daß sie 1,0 bis 2,5 Gew. % (bezogen auf 100 Gew. % des Polymerengemischs aus den Komponenten a und b) Ruß enthalten.

6. Polyethylenformmassen nach einem oder mehreren der Ansprüche 1 bis 4 mit einem Anteil von mehr als 50 Gew. % (bezogen auf das Polymerengemisch aus a und b) eines Polyethylens oder eines Ethylencopolymerisats mit einer Grenzviskositätszahl von 100 bis 700 ml/g, **dadurch gekennzeichnet**, daß sie 2,5 bis 10,0 Gew. % (bezogen auf 100 Gew. % des Polymerengemischs aus den Komponenten a und b) Ruß enthalten.

7. Polyethylenformmassen nach einem oder mehreren der Ansprüche 1 bis 6, **dadurch gekennzeichnet**, daß sie Ruß enthalten, der einen Ölbedarf (nach DIN ISO 787/5) von 600 bis 2000 9/100 g aufweist.

8. Polyethylenformmassen nach einem oder mehreren der Ansprüche 1 bis 7, **dadurch gekennzeichnet**, daß sie Ruß enthalten, der eine Dibutylphthalataufnahme (nach DIN 53601 oder ASTMD 2414) von 120 bis 500 ml/100 g aufweist.

**Claims**

1. A polyethylene molding material for the production of moldings having a surface resistance of not more than $10^9$ $\Omega$, consisting of

   a) 5 to 57% by weight of a polyethylene or of an ethylene copolymer having a limiting viscosity number of 100 to 700 ml/g,
   b) 95 to 43% by weight of a polyethylene having a limiting viscosity number of at least 1600 ml/g, where the sum of components a and b is always 100% by weight and the limiting viscosity number of the polymer blend of a and b is at least 1600 ml/g,
   c) 1.0 to 10.0% by weight (based on 100% by weight of the polymer blend of a and b) of carbon black and
   d) 0 to 5.0% by weight (based on the mixture of c and the polymer blend of a and b) of conventional additives.

2. The polyethylene molding material as claimed in claim 1, wherein 0.05 to 5.0% by weight (based on the mixture of c and the polymer blend of a and b) of component d is used.

3. The polyethylene molding material as claimed in either or both of claims 1 and 2, wherein the ethylene copolymers having a limiting viscosity number of 100 to 700 ml/g have a comonomer content of up to 10% by weight.

4. The polyethylene molding material as claimed in either or both of claim 1 and 2, wherein the ethylene copolymers having a limiting viscosity number of 100 to 700 ml/g have a comonomer content of 0.5 to 5% by weight.

5. The polyethylene molding material as claimed in one or more of claims 1 to 4, containing up to 50% by weight (based on the polymer blend of a and b) of a polyethylene or of an ethylene copolymer having a limiting viscosity number of 100 to 700 ml/g, wherein said molding material contains 1.0 to 2.5% by weight (based on 100% by weight of the polymer blend of components a and b) of carbon black.

6. The polyethylene molding material as claimed in one or more of claims 1 to 4, containing more than 50% by weight (based on the polymer blend of a and b) of a polyethylene or of an ethylene copolymer having a limiting viscosity number of 100 to 700 ml/g, wherein said molding material contains 2.5 to 10.0% by weight (based on 100% by weight of the polymer blend of components a and b) of carbon black.

7. The polyethylene molding material as claimed in one or more of claims 1 to 6, wherein said molding material contains carbon black which has an oil requirement (according to DIN ISO 787/5) of 600 to 2000 g/100 g.

8. The polyethylene molding material as claimed in one or more of claims 1 to 7, wherein said molding material contains carbon black which has a dibutyl phthalate absorption (according to DIN 53601 or ASTMD 2414) of 120 to 500 ml/100 g.

## Revendications

1. Masses de moulage à base de polyéthylène pour la production de corps moulés présentant une résistance superficielle d'au maximum $10^9\ \Omega$, constituées

   a) de 5 à 57% en poids d'un polyéthylène ou d'un copolymère d'éthylène présentant une viscosité intrinsèque de 100 à 700 ml/g,
   b) de 95 à 43% en poids d'un polyéthylène présentant une viscosité intrinsèque d'au moins 1600 ml/g, la somme des composants a et b représentant toujours 100% en poids et la viscosité intrinsèque du mélange de polymères de a et b étant: au moins de 1600 ml/g
   c) de 1,0 à 10,0% en poids (par rapport à 100% en poids du mélange de polymères de a et b) de suie ainsi que
   d) de 0 à 5,0% en poids (par rapport au mélange de c et du mélange de polymères de a et b) d'additifs usuels.

2. Masses de moulage à base de polyéthylènes selon la revendication 1, **caractérisées en ce que** le composant d est utilisé à raison de 0,05 à 5,0% en poids (par rapport au mélange de c et du mélange de polymères de a et b).

3. Masses de moulage à base de polyéthylènes selon l'une ou plusieurs des revendications 1 à 2, **caractérisées en ce que** les copolymères d'éthylène présentant une viscosité intrinsèque de 100 à 700 ml/g contiennent une proportion en comonomères allant jusqu'à 10% en poids.

4. Masses de moulage à base de polyéthylènes selon l'une ou plusieurs des revendications 1 à 2, **caractérisées en ce que** les copolymères d'éthylène présentant une viscosité intrinsèque de 100 à 700 ml/g contiennent une proportion en comonomères allant de 0,5 à 5% en poids.

5. Masses de moulage à base de polyéthylènes selon l'une ou plusieurs des revendications 1 à 4, présentant une proportion allant jusqu'à 50% en poids (par rapport au mélange de polymères de a et de b) d'un polyéthylène ou d'un copolymère d'éthylène présentant une viscosité intrinsèque de 100 à 700 ml/g, **caractérisées en ce qu'**elles contiennent 1,0 à 2,5% en poids (par rapport à 100% en poids du mélange de polymères des composants a et b) de suie.

6. Masses de moulage à base de polyéthylènes selon l'une ou plusieurs des revendications 1 à 4, présentant une proportion de plus de 50% en poids (par rapport au mélange de polymères de a et de b) d'un polyéthylène ou d'un copolymère d'éthylène présentant un indice de viscosité limite de 100 à 700 ml/g, **caractérisées en ce qu'**elles contiennent 2,5 à 10,0% en poids (par rapport à 100% en poids du mélange de polymères des composants a et b) de suie.

7. Masses de moulage à base de polyéthylènes selon l'une ou plusieurs des revendications 1 à 6, **caractérisées en ce qu'**elles contiennent de la suie qui présente une consommation d'huile (selon la norme DIN ISO 787/5) de 600 à 2000 g/100 g.

8. Masses de moulage à base de polyéthylènes selon l'une ou plusieurs des revendications 1 à 7, **caractérisées en ce qu'**elles contiennent de la suie qui présente une absorption de phtalate de dibutyle (selon les normes DIN 53601 ou ASTM 2414) de 120 à 500 ml/100 g.